# EUROPEAN PATENT APPLICATION

(11) **EP 1 833 056 A1**
(43) Date of publication of application: **12.09.2007**
(21) Application number: 06425150.7
(22) Date of filing: 07.03.2006
(51) Int. Cl.: G11B 33/04, E05B 73/00

(54) **Case with anti-shoplifting system for digital supports**

(71) Applicant: Sacchini, Enzo, 42100 Reggio Emiila (IT)
(72) Inventor: Sacchini, Enzo, 42100 Reggio Emiila (IT)
(74) Representative: Corradini, Corrado

(57) **Abstract**

A case for digital supports, comprising two matching half-shells (10, 11) articulated together so as to open and close book-like through at least one hinge (12), where at least two perimetric edges (66) for mutual abutment of said half-shells have two openings (2) suitable for receiving the arms (40) of an anti-opening U-shaped body (4) when the case is closed; said two arms (40) having a transversal coupling size that is less than the corresponding size of the respective opening (2), and at least one of said arms (40) having an engagement element intended to be arranged in a relative position with the respective edge (66) such as to prevent the anti-opening U-shaped body (4) from slipping off, and held here by a stop group (52) carried by a security device (5) suitable for tightly coupling with a fastening means (43) foreseen behind the U-shaped body (4).

## Description

The present finding refers, in a totally general way, to cases for optically scanned magnetic supports, and, more specifically, it concerns means for protecting their contents against theft.

By optically scanned supports here we mean in general digital magnetic supports like discs, e.g. CD, CD-ROM, DVD, and the like.

Hereafter and for the sake of simplicity we shall make express reference to compact disks, in short CDs.

The aforementioned CDs are generally introduced onto the market in suitable packaging, generally in the form of a case, outside of which a generally transparent wrapping is usually foreseen.

Cases are known that comprise two synthetic half-shells, which are generally thin and flat-shaped, that are articulated together so as to open and close book-like through a common hinge.

Each half-shell is tray-shaped, i.e. it comprises a generally flat thin sheet the free edges of which face inwards.

Said turned up edges of the two half-shells are suitable for abutting against one another when the case is closed, making it look like a flat body with substantially constant thickness.

At least one of said half-shells is internally equipped with an elastically deformable projection, usually known as button, onto which the central hole of the CD is suitable for being slotted, which remains hooked here thanks to projecting retaining teeth foreseen at the top of said button.

Once the case has been opened, the CD can be removed by pressing on the button that, elastically deforming, disengages the teeth from said central hole.

When the case is closed, the top of said button is very close to the central zone of the opposite half-shell, which is generally flexible perpendicular to the plane on which it lies, due to the small thickness and the type of material from which it is manufactured.

For this reason, a pressure exerted on the central part of the case can lead to a deformation of the button such as to release the CD from the respective retaining teeth. This has not escaped the attention of thieves, who can dislodge the CD as stated above and, after having sliced through the wrapper that surrounds the case, can separate the two facing edges of the two half-shells with a knife, until a gap is obtained that is sufficient to slip the CD out from it.

To solve this problem solutions have been proposed that foresee an anti-opening means, i.e. suitable for preventing the two half-shells making up the case from being moved apart without authorisation.

Said means comprises a U-shaped body, the arms of which are intended to be slotted, practically fitting to size, in two matching openings that are formed on two turned up edges for mutual abutment of the two half-shells, generally the two edges that are opposite the mutual articulation hinge of the half-shells.

One of said arms has a snap-locking element, which is generally shaped like a flexible tab arranged longitudinally and raised towards the opposite arm.

During the insertion of the U-shaped body said tab flexes freely, so as to pass through the opening and allow the relative arm to be arranged between the CD and one of the two half-shells, generally the half-shell that carries the button for fixing the CD.

Once the opening has been passed and the inside of the case has been reached, the flexible tab once again takes up its non-deformed configuration.

In this position, it has the function of avoiding the unauthorised detachment of the anti-opening U-shaped body.

This is because, once the U-shaped body is coupled with the case, the raised end of the tab faces the inner face of the abutment edge that carries the respective through opening, which actually prevents its unauthorized removal.

For said removal it is foreseen that the flexible tab comprises at least one metallic part on which to intervene from the outside with a suitable magnetic apparatus, in the hands of authorized personnel.

Through said magnetic apparatus, the tab is made to flex so as to be temporarily arranged in a position such as to be able to pass, together with its own support arm, through the respective side opening of the case.

The described solution has proven unsatisfactory because it is constructively complex, therefore also expensive, and because the presence of said flexible tab can make the assembly and/or disassembly of the U-shaped body awkward following unhelpful misalignments and/or catching between the elements carried by the U-shaped body and the respective side opening of the case.

Moreover, the cross-member of the U-shaped body and the respective openings remain disadvantageously exposed, i.e. easily accessible to thieves.

The main purpose of the present finding is to provide a case for CDs and the like equipped with an anti-shoplifting device that can be installed and removed quickly and easily.

Another purpose of the finding is to make an anti-shoplifting case where the retaining means of the two half-shells are substantially protected, or at least shielded.

A further purpose is to achieve said objective in the context of a simple, rational, reliable, strong and cost-effective constructive solution.

Said purposes are accomplished thanks to the characterising elements indicated in the claims.

In a totally general sense, the case comprises two half-shells articulated together so as to open and close book-like, where at least two perimetric edges of mutual abutment of said half-shells, for example the two that when the case is closed are opposite said mutual articulation, have two openings suitable for receiving the arms of an anti-opening U-shaped body.

In accordance with the finding, the quoted two arms have a smaller transversal coupling dimension than the corresponding dimension of the respective opening, so as to leave the U-shaped body a certain clearance that allows it to be moved transversally even after insertion inside the case.

Moreover, at least one of said arms has an engagement element intended to be arranged in a relative position with the relative interlocking edge such as to prevent the anti-opening U-shaped body from being slipped off.

Preferably said engagement element comprises a side appendix the canti-levered size of which increases said transversal coupling size of the relative arm, for example by an amount equal to the difference with the corresponding size of the opening.

In this way an anti-slip tooth is provided that, once introduced into the case, can be arranged facing the inner face of the edge of the respective introduction half-shell, thanks to a transversal movement of the U-shaped body.

A stop group is also foreseen that is suitable for locking said tooth in said configuration, said stop group being carried by a security device, which shall be discussed in greater detail later on, that is suitable for tightly coupling with a clamping means fixed behind the U-shaped body.

In order to better understand the characteristics and the constructive advantages of the finding, hereafter reference is made to the figures of the attached tables of drawings that illustrate, purely as a non-limiting example, one particular and preferred embodiment thereof.

FIG. 1 is an exploded perspective view that shows an open case together with the respective anti-shoplifting system.

FIG. 2 is a partial plan view, in section and enlarged, which shows the closed case at the moment of insertion of the anti-opening U-shaped body.

FIG. 3 is a view totally similar to the previous one that shows the U-shaped body locked in position.

FIG. 4 is the section IV-IV indicated in FIG. 3.

FIG. 5 is similar to FIG. 1 and shows a variant of the security device of the anti-shoplifting system.

FIG. 6 is similar to FIG. 1 and illustrates a further variant of the security device of the anti-shoplifting system.

FIG. 7 is a partial plan view, in section and enlarged, which shows the case of FIG. 6 closed with the U-shaped body locked in position.

FIG. 8 is the section VIII-VIII indicated in FIG. 7.

FIGS. 9 and 10 are similar to FIG. 1 and illustrate an anti-shoplifting system in accordance with a second embodiment of the invention, shown in two relative positions with respect to the case.

FIG. 11 shows a variant of the anti-shoplifting system illustrated in FIGS. 9 and 10.

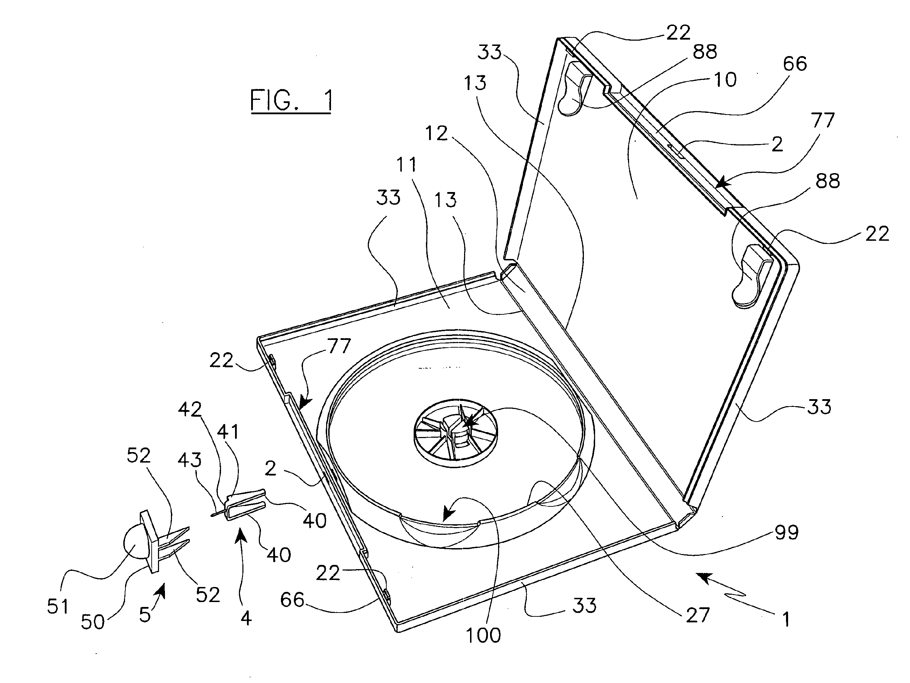

From the quoted figures, see in particular FIG. 1, it is possible to see a case of small thickness and flat in shape, wholly indicated with reference numeral 1, which consists of a suitable material, generally a relatively rigid synthetic material, transparent or not.

The case 1 comprises two half-shells 10 and 11 with rectangular plan that are joined together by a hinge or spine 12 with interposition of respective predetermined folding lines 13.

Along the three consecutive free edges of the inner faces of the half-shells 10 and 11 respective fully extending small marginal walls are foreseen, the shortest of which are indicated with 33, and the longest with 66.

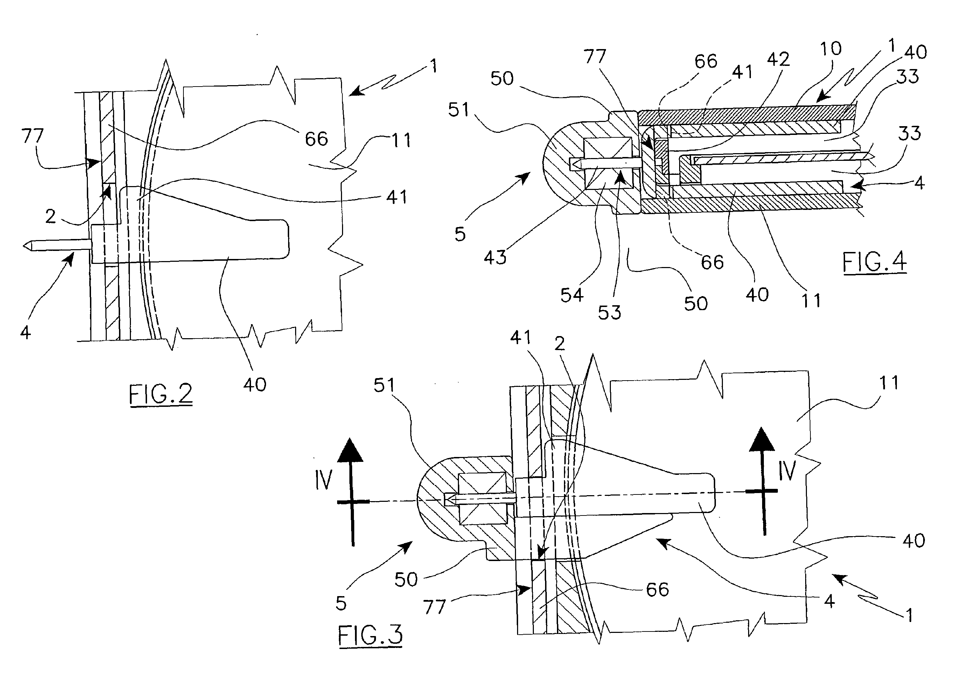

Said small walls 33 and 66 are intended to abut with each other (FIG. 4) when the case 1 is closed, where the two half-shells 10 and 11 are joined together through a normal snap-fastening system generally indicated with 22 in FIG. 1.

The half-shell 11 has an annular projection 27 that provides the seat 100 for receiving and retaining the respective digital support, like a CD (not shown), and at the centre of said projection 27 there is a normal elastically deformable button 99 suitable for hooking the edge of the central hole of said CD.

Moreover, the half-shell 10 has two elastic tabs 88 (FIG. 1) intended to hold advertising and/or information material, like for example a leaflet that displays the content of the quoted CD printed on it.

At the centre of the small walls 66, see the whole of the attached figures, there are two slits, or rather slots, 2 that are formed on the bottom of respective inlets 77.

Said slots 2 are identically sized (see FIG. 1), and the arms 40 of a U-shaped body 4 are intended to engage with them (see FIGS. 2 to 4), said arms 40 having the function of preventing unauthorized opening of the case 1, i.e. the two half-shells 10 and 11 being pulled apart.

The U-shaped body 4 consists of a suitable rigid material, for example sheet metal.

In particular, the two arms 40 of the U-shaped body have a thickness practically equal to the width of the slots 2, and a width that is less than the length of said slots 2 (FIGS. 1 to 3).

From one side of one of said arms 40 a projection or appendix 41 branches the canti-levered size of which added to the width of its own arm 40 is practically equal to the length of the slot 2.

In the example shown the projection 41 is shaped like a triangular tooth, at the front provides a draft for its insertion in the slot 2, and at the back provides an anti-slip abutment suitable for resting against the inner face of the small wall 66.

In particular, said abutment consists of a flat shoulder that is perpendicular to the arm 40, and is spaced from the cross-member 42 of the U-shaped body 4 by an amount that is practically equal to the thickness of the small wall 66.

Once the arms 40 have been inserted to the bottom of the slots 2 (see FIG. 2), the U-shaped body 4 is moved laterally to hook the tooth 41 to the small wall 66 (FIG. 3).

Having done this the U-shaped body 4 is locked in said position through the following means.

They comprise a thin central shaft, or pin, 43 that projects from the outer face of the cross-member 42 of the U-shaped body 4, and a security device 5 that is suitable for coupling with said pin 43.

The pin 43 has an irregular or rough outer surface, thanks to which it can tightly engage with the security device 5.

The latter comprises a support body 50, known as plate or base, which on the side of the case 1 has a stop group of the U-shaped body 4, and in an opposite position has a fastening head 51 of said pin 43.

Said stop group comprises two canti-levered tabs 52 that are suitable for inserting practically to size in the end areas of the slots 2 that are free when the tooth 41 is hooked to the small wall 66 (FIG. 3).

In particular, the tabs 52 have the free end bevelled, to provide a draft suitable for making it easier to insert into the slots 2.

Between the two tabs 52 a blind hole 53 is foreseen that extends inside the head 51 where there is a throttling system 54, *per sé* known, for example comprising a crown of mobile metallic marbles constantly elastically biased towards the open end of the hole 53.

During the coupling between tabs 52 and slots 2, the pin 43 is inserted all the way into the head 51, where is tightly couples with the throttling system 54.

At this point to open the case 1 a suitable magnetic instrument is necessary, this being in the possession of authorised personnel like for example the CD demonstrator/seller.

Moreover, when the anti-shoplifting system is installed, the U-shaped body 4 and the respective hooking slots 2 are advantageously shielded and/or protected by the wall 50 of the security device 5 (see FIGS. 3 and 4).

It should be specified that in the example illustrated in figures 1 to 4, the wall 50 has a width equal to the overall thickness of the closed case 1.

This is so that its sides are flush with the flat faces of the half-shells, 10 and 11, so as not to provide a hold that a thief could use as a lever to pull away the security device 5.

The length of the wall 50 can, however, be selected substantially as desired.

Preferably, said length is equal to the minimum value allowed by the bulk of the head 51 and of the tabs 52, so that the part in view of the security device 5 is as small as possible (see FIGS.1 and 3).

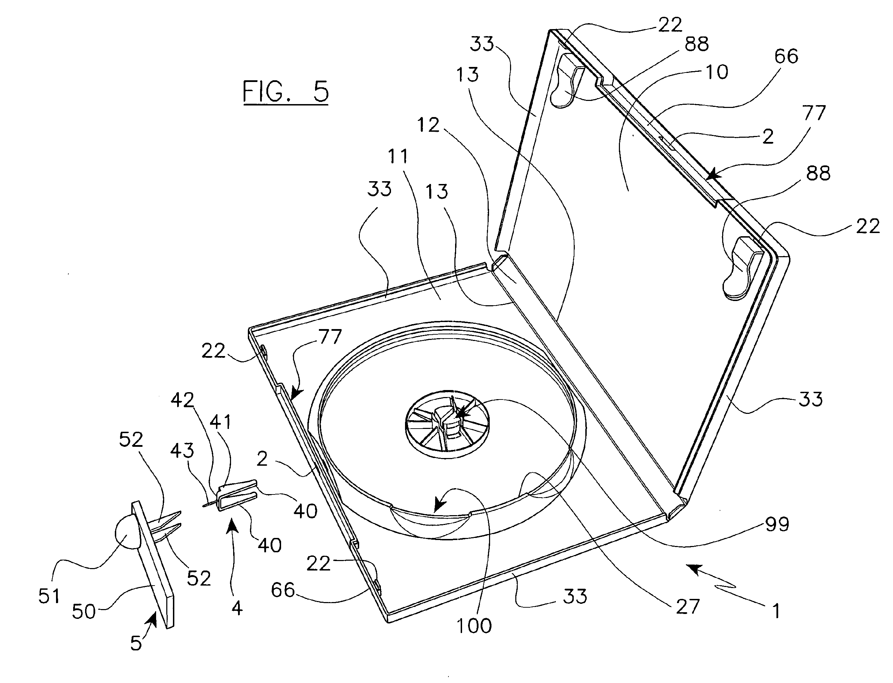

Nevertheless, it could also have a greater value, for example to shield the U-shaped body 4 more, as shown in figure 5.

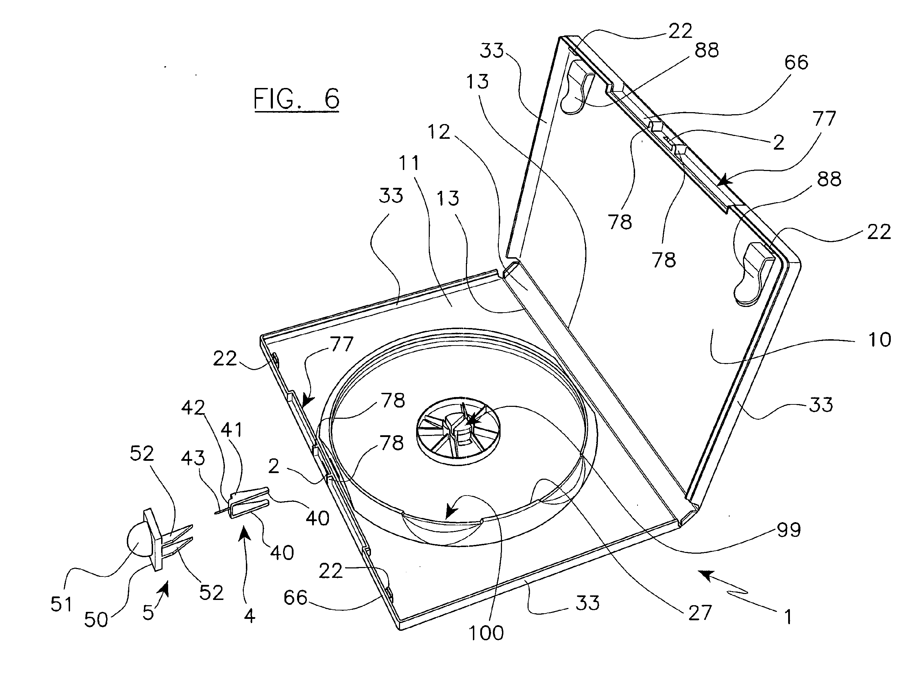

According to a variant shown in figures 6 to 8, the security device 5 is of a size such as to insert substantially fitting to size inside the inlets 77 of the small walls 66, when the case 1 is closed.

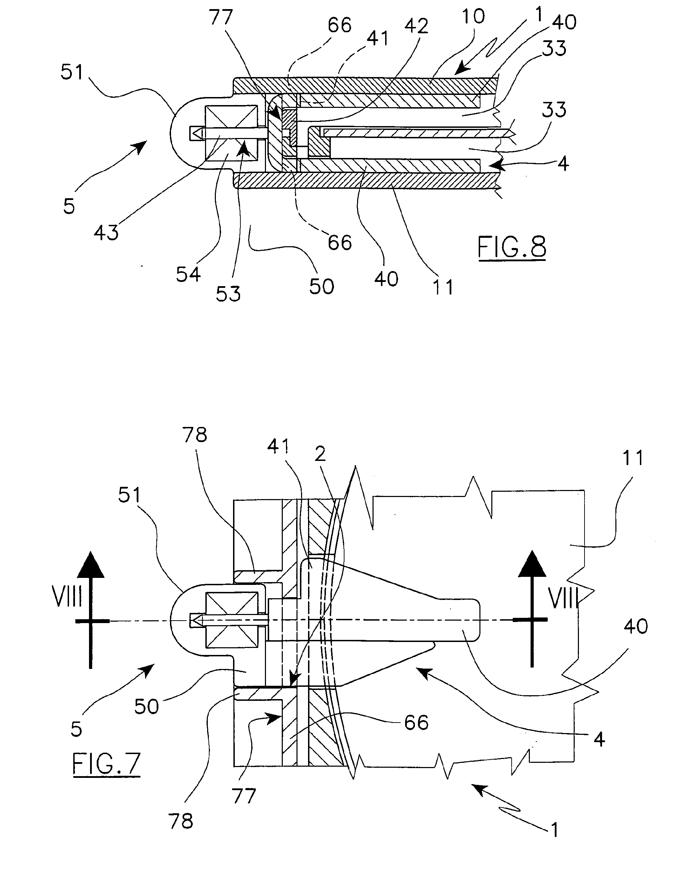

More specifically, the wall 50 has a width substantially equal to the width of the space that is defined by said inlets 77 when the relative small walls 66 abut with one another (see FIG.8).

In this way, by suitably sizing the depth of said inlets 77 and the thickness of the cross-member 42 of the U-shaped body 4, it is possible to completely hide the wall 50 of the security device 5 inside the aforementioned space, making it even more protected against attempts to force it.

In this context, it is also preferable that two projecting hinges 78 extend from the bottom of each of the inlets 77, arranged on opposite sides of the relative slots 2 and separated apart by a distance equal to the length of the wall 50 of the security device 5 (see FIGS.6 and 8).

Thanks to this solution, when the small walls 66 abut against one another a rectangular seat is defined, closed on all sides, which houses the wall 50 fitting to size and makes it completely inaccessible.

The merits and the advantages of the finding can be clearly understood from the above and from the attached figures.

Of course, the solutions shown are not the only ones possible.

For example, two projections or appendices 41 can be foreseen, one for each arm 40 of the U-shaped body 4.

Moreover, the shape of said projection 41, or projections, can be whatever, the important thing is that it provides, in combination with the latch 52, an anti-slip means for the U-shaped body 4.

For example, said projection 41 could be provided by a notch formed on the side of the relative arm 40, said notch being suitable for locking together, substantially fitting to size, with the thickness of the respective edge 66.

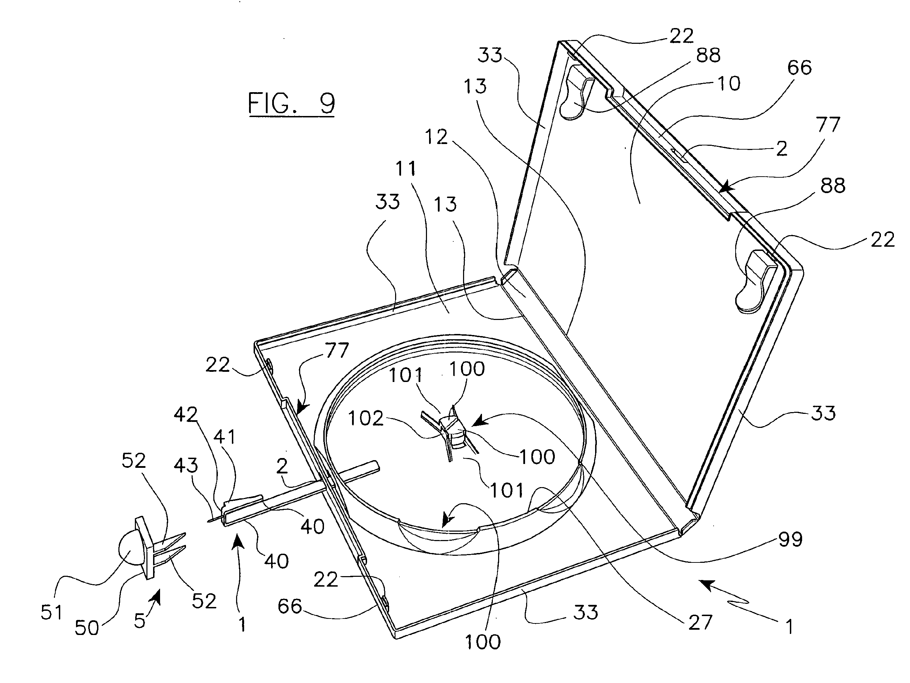

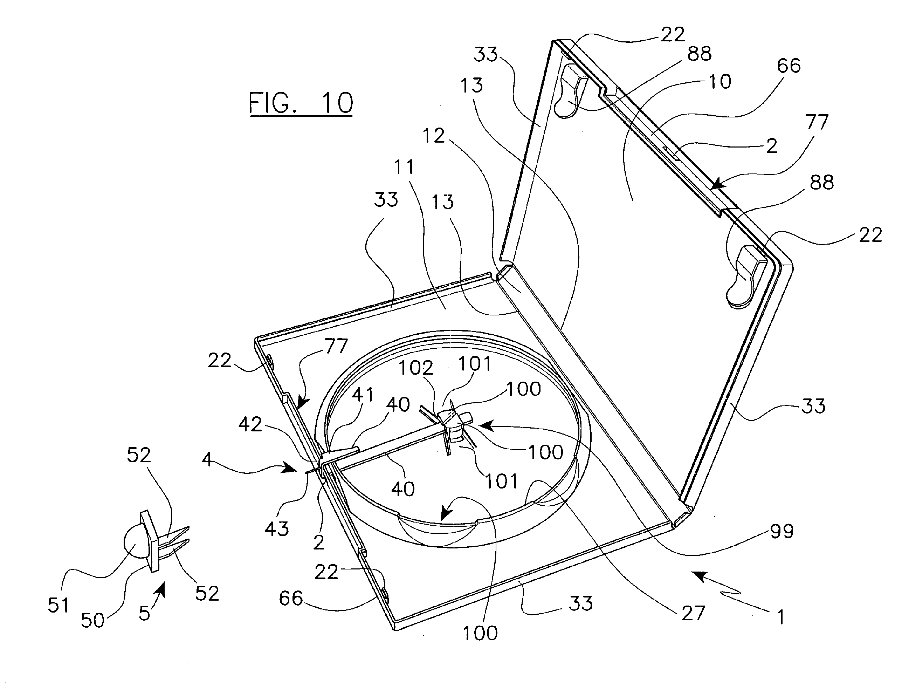

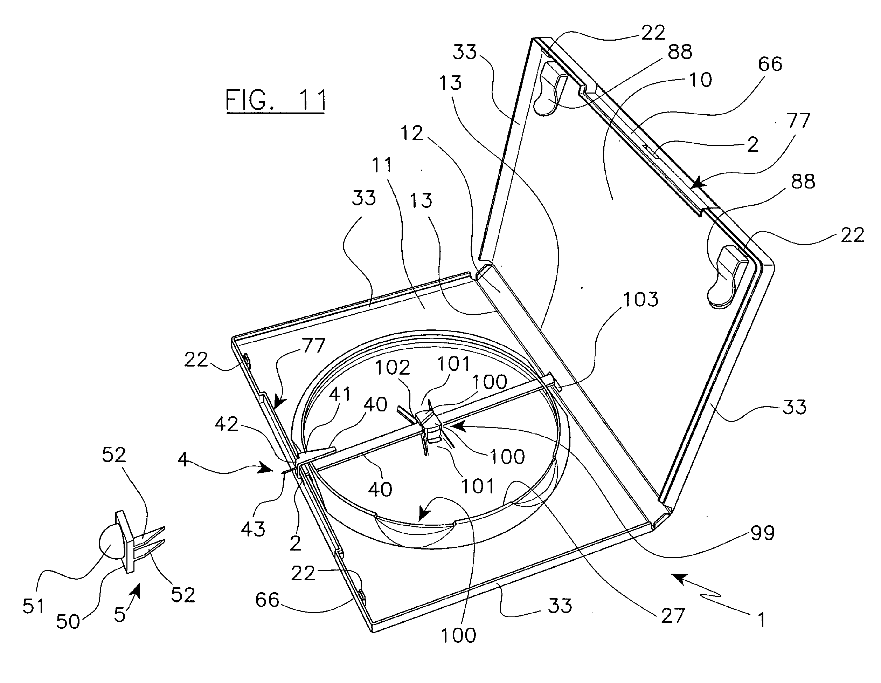

Figures 9 to 11, illustrate an alternative and particularly advantageous embodiment of the invention.

In such an embodiment, the button 99 suitable for hooking the central hole of the CD is formed from two separate bodies 100 arranged adjacent to each other.

Each of said bodies 100 is provided at the free end of a respective flexible tab 101 that projects from the inner face of the half-shell 11, and extends canti-levered towards the inside of the container 1.

Said flexible tabs 101 mirror one another, so that a pressure applied on top of them makes them both flex towards the inner face of the half-shell 11, moving the bodies 100 closer together and thus allowing the CD to be unhooked.

As can be seen in figure 5, this configuration provides a through slit 102 below the bodies 100 that separates them from the plane of the half-shell 11.

In this context, the arm 40 of the U-shaped body 4, which is intended to go between the CD and the half-shell 11, has a greater longitudinal extension than the distance that separates the relative small side wall 66 from the button 99.

In this way, when the U-shaped body 4 is inserted all the way into the slot 2, said arm 40 is slotted inside the through slit 102 of the button 99, arranged between the bodies 100 and the underlying half-shell 11 (see FIG.6).

In this position, it prevents the tabs 101 from flexing, preventing the bodies 100 from moving towards the inner face of the half-shell 11 and thus from moving closer together.

Therefore, said arm 40 effectively prevents a pressure exerted on the outside of the closed case from being able to unhook the CD from the button 99.

Preferably, said arm 40 supports an indicator element (not shown), which is suitable for interacting with a known anti-theft system, so that the latter emits an alarm signal, typically a sound alarm, should a product be taken out from the shop without authorisation.

Generally, said indicator element consists of a small badge or a magnetic tag, which is fixed to said arm 40 for example through gluing.

Therefore, as illustrated in the figures, the arm 40 has a width that, whilst still allowing it to pass into the slit 102, is sufficiently wide as to house said indicator element.

According to a variant of this embodiment (see FIG. 7), said elongated arm 40 of the U-shaped body 4 has a greater longitudinal extension than the total width of the case 1.

In this case, the mutual articulation hinge 12 between the half-shells, 10 and 11, has an opening 103 facing in front of the opening 2 formed in the small wall 66 opposite it.

Thus, when the U-shaped body 4 is completely inserted into the closed case, the arm 40 passes inside the slit 102 and its free end engages in said opening 103 of the hinge 12, contributing to making the case 1 more rigid and therefore more reliable.

Of course, all of the solutions and variants outlined in the previous description can be combined together according to specific requirements.

## Claims

1. Case for digital supports, comprising two matching half-shells (10, 11) articulated together so as to open and close book-like through at least one hinge (12), where at least two perimetric edges (66) for mutual abutment of said half-shells have two openings (2) suitable for receiving the arms (40) of an anti-opening U-shaped body (4) when the case is closed, **characterised in that** said two arms (40) have a transversal coupling size that is less than the corresponding size of the respective opening (2), and at least one of said arms (40) has an engagement element (41) intended to be arranged in a relative position with the respective edge (66) such as to prevent the anti-opening U-shaped body (4) from slipping off, and held here by a stop group (52) carried by a security device (5) suitable for tightly coupling with a fastening means (43) foreseen behind the U-shaped body (4).

2. Case according to claim 1, **characterised in that** said engagement element comprises a side appendix (41) the canti-levered size of which increases said transversal coupling size of said at least one arm (40), said appendix (41) being intended to be arranged facing the inner face of the respective edge (66) to prevent the anti-opening U-shaped body (4) from slipping.

3. Case according to claim 2, **characterised in that** the canti-levered size of said appendix (41) is about equal to the difference between said transversal coupling size of said at least one arm (40) and the corresponding size of the respective opening (2).

4. Case according to claim 2, **characterised in that** said appendix (41) comprises a flat shoulder that is arranged perpendicular to its own arm (40).

5. Case according to claim 4, **characterised in that** said flat shoulder is spaced from the cross-member (42) of the anti-opening U-shaped body (4) by an amount practically equal to the thickness of the edge (33) of the half-shell (11).

6. Case according to claim 1, **characterised in that** said stop group comprises at least one element of elongated shape (52) intended to be inserted practically fitting to size in the free area left by an arm (40) of the anti-opening U-shaped body (4) in the relative opening (2).

7. Case according to claim 6, **characterised in that** it comprises two elements of elongated shape (52), each intended to be inserted in the free area left by a respective arm (40) of the U-shaped body (4) in the relative opening (2).

8. Case according to claim 7, **characterised in that** said elements of elongated shape (52) are in contact with the generatrices of said arms (40) that are situated on the opposite side to that occupied by said engagement element (41).

9. Case according to claim 6, **characterised in that** said element of elongated shape (52) projects from a support body (50) having a width about equal to the thickness of the closed case.

10. Case according to claim 6, **characterised in that** said element of elongated shape (52) projects from a support body (50) having a width that is less than the thickness of the closed case.

11. Case according to claim 10, **characterised in that** said support body (50) is intended to be housed, when the case is closed, in a space defined by two recesses (77) respectively formed on each of said at least two perimetric edges (66).

12. Case according to claim 11, **characterised in that** inside said space a seat is defined that encloses substantially fitting to size said support body (50).

13. Case according to claim 12, **characterised in that** said seat is defined by two pairs of projecting hinges (78) that respectively extend from the bottom of each of said recesses (77).

14. Case according to claim 13, **characterised in that** the projecting hinges (78) of each pair are separated by a distance equal to the length of the support body (50).

15. Case according to claim 1, **characterised in that** said security device (5) comprises a throttling system (54) that is automatically activated and magnetically deactivated.

16. Case according to claim 1, **characterised in that** said fastening means comprises a shaft-shaped element (43) with a rough surface, like a pin fixed to the cross-member (42) of the anti-opening U-shaped body (4) and suitable for being inserted in the seat (53) of said throttling system (54).

17. Case according to claim 1, **characterised in that** said security device (5) comprises a shielding wall (50) suitable for covering the part of case that carries the anti-opening U-shaped body (4).

18. Case according to claim 1, **characterised in that** at least one of said arms (40) of the anti-opening U-shaped body (4) is intended to go between one of said half-shells (11) and a deformable elastic projection (99) that projects from said half-shell (11), and onto which the central hole of a digital support is suitable for being slotted.

19. Case according to claim 18, **characterised in that** said deformable elastic projection (99) comprises at least two separate bodies (100) provided at the free end of a respective flexible arm (101) that projects from said half-shell (11), and said at least one arm (40) of the anti-opening U-shaped body (4) is intended to slot into a through slit (102) arranged between said flexible arms (101) and the relative half-shell (11).

20. Case according to claim 18, **characterised in that** said hinge (12) of the two half-shells (10, 11) comprises at least one opening (103) suitable for receiving, when the case is closed, the end of said at least one arm (40) of the anti-opening U-shaped body (4) that goes between the deformable elastic projection (99) and the relative half-shell (11).

21. Case according to claim 18, **characterised in that** said at least one arm (40) of the anti-opening U-shaped body (4) carries an indicator element suitable for interacting with an anti-theft system.
